# EUROPEAN PATENT APPLICATION

(11) **EP 1 306 992 A2**
(43) Date of publication of application: **02.05.2003**
(21) Application number: 02022374.9
(22) Date of filing: 09.10.2002
(51) Int. Cl.: H04H 1/00

(54) **Interpolation method and receiving system for digital broadcast**

(30) Priority: 26.10.2001 JP 2001328488
(71) Applicant: Hitachi, Ltd., Chiyoda-ku, Tokyo 101-8010 (JP)
(72) Inventor: Ishida, Takaharu, Int. Prop. Dept., Hitachi, Ltd., Chiyoda-ku, Tokyo 100-8220 (JP); Kawamata, Yukihiro, Int. Prop. Dept, Hitachi, Ltd., Chiyoda-ku, Tokyo 100-8220 (JP); Tomobe, Osamu, Int. Prop. Dept., Hitachi, Ltd., Chiyoda-ku, Tokyo 100-8220 (JP); Yamaashi, Kimiya, Int. Prop. Dept., Hitachi, Ltd., Chiyoda-ku, Tokyo 100-8220 (JP)
(74) Representative: Beetz & Partner Patentanwälte

(57) **Abstract**

In a receiving terminal (201), while a dropout of digital data is predicted which is caused by an instantaneous interruption of digital broadcasting electromagnetic waves, such digital data whose dropout may be predicted is previously acquired via a communication from a broadcasting station (120), or via a broadcasting electromagnetic wave. Then, the acquired digital data is stored on the side of the receiving terminal. When a dropout of digital data (312) actually occurs, this dropped digital data is interpolated based upon previously prepared interpolation data (322) on the side of the receiving terminal so as to prevent an interruption of the digital broadcast. When the dropout of the digital data is predicted, it is not only predicted that the digital data is completely dropped, but also such a condition where a dangerous state is expected is predicted with margin.

## Description

### BACKGROUND OF THE INVENTION

The present invention generally relates to a digital broadcast transmitting apparatus and a digital broadcast receiving terminal. More specifically, the present invention is directed to a technique capable of preventing an instantaneous interruption of a digital broadcasting program.

Conventionally, in the case that electromagnetic waves are interrupted under reception of digital broadcasting programs and therefore digital data cannot be received, such a "sound interrupt" phenomenon may occur in which the digital broadcast program is suddenly interrupted (will be referred to as a "cliff effect"). As a consequence, as described in JP-A-2000-216848, a check is made as to whether or not the discontinuity information is contained in the additional information included in the transport stream received via the digital interface from another electronic appliance. When such discontinuity information is detected from the transport stream, since the additional information contained in the transport stream is acquired, both the decoding operation of the video data and the decoding operation of the audio data when the externally entered program is changed are quickly carried out, so that the decoded outputs are not interrupted.

Also, JP-A-10-243366 describes the data broadcasting system. That is, in such a case that the data broadcast is interrupted due to such a reason that the transmission data file has not yet been delivered, the data file is transferred by utilizing the electromagnetic waves transmitted from the broadcasting station, and furthermore, the list of the transmission files having the auxiliary information which contains the file attribute of this data file is transferred as a separate file different from the data file. The data broadcast receiving/display apparatus employed in this data broadcasting system is arranged by the data broadcasting data receiving means, the data file storing means, the file list extracting means, the not-delivered file specifying means, the file attribute judging means, the substitution data producing means, and also, the substitution file producing means. The data broadcasting data receiving means receives such data broadcast containing both the data file and the transmission file list. The data file storing means stores thereinto the received data as the respective files. The file list extracting means extracts the file of the transmission files from the received files. The not-delivered file specifying means specifies the not-delivered file based upon the transmission file list and the received data file. The file attribute judging means judges the file attribute of the specified not-delivered file. The substitution data producing means produces the data containing such information that the not-delivered file is not yet delivered. The substitution file producing means produces such a substitution file by adding the same name as that of the not-delivered file to the substitution data which is produced by the substitution data producing means, and then, outputs this produced substitution file to the data file storing means. As a result, this data broadcast receiving/display apparatus can confirm the existence of the not-delivered data file, and also, can specify the file name thereof. Also, this data broadcast receiving/display apparatus need not separately display the error message, and does not bother this error message. Furthermore, this data broadcast receiving/display apparatus may have such an advantage capable of avoiding the occurrence of the following problem. That is, since the not-delivered data is tried to be acquired by repeating the retry operation, lengthy time is required so as to display both the data and the error message, which have already been received.

### SUMMARY OF THE INVENTION

An object of the present invention is to provide both a digital broadcast interpolating method and a digital broadcast receiving system, capable of realizing a digital broadcast without any interruption by interpolating data with respect to a so-called "cliff effect" occurred during reception of a digital broadcast.

In the above-described conventional technique, in the case that after the discontinuity information has been detected, for instance, the picture data becomes discontinued, the digital data which has been finally outputted under normal condition is continuously outputted until the digital data may be again detected under normal condition. However, such a conventional method would cause that voice becomes unnatural with respect to listeners.

Also, in the above-described two conventional techniques, after such a fact that the broadcast data was not delivered has been detected, the substitution data is newly produced and also the data which has been finally outputted under normal condition is outputted. As a result, in these conventional techniques, the time delay in the data processing operations may easily occur, and the real-time characteristic cannot be satisfied. This time delay never gives pleasant feelings to the listeners of the digital broadcast. Thus, such a method has been expected, by which digital data may be interpolated so as to output the interpolated data in real time, while listeners need not become aware of this data interpolation.

To solve the above-described problem, in accordance with the present invention, while a dropout of digital data is previously predicted, the dropout-predictable digital data is previously stored from a broadcasting station via a communication, and/or a broadcast wave to a terminal side. When digital data happens to occur, the dropped digital data is quickly interpolated at the same time on the side of the terminal, so that such a digital broadcast without any interruption may be realized. At this time, it is not only predicted that the digital data is completely dropped, but also such a condition where a risk of data dropout may be expected is predicted with margin. As a result, it is possible to provide such a digital broadcast which may give a small amount of stress to listeners, while reducing such probability that rapid interruptions of broadcast electromagnetic waves suddenly occur, and thus, supplies of picture/voice to these listeners are stopped.

In accordance with the present invention, even when a data dropout happens to occur due to an instantaneous interruption, such data which has been interpolated by employing low bit rate data previously stored into the terminal is supplied to an output apparatus, so that the listeners can enjoy pleasant broadcasts without having unpleasant feelings caused by the data interruption.

Since another arrangement of the present invention is employed, while data-dropout predictable data is previously acquired via a communication from a contents distributing station by predicting an occurrence of a dropout of a broadcast electromagnetic wave, data interpolation operation can be quickly carried out in such a case that a data dropout caused by an instantaneous interruption actually occurs. As a consequence, the digital broadcast without any interruption can be provided to the listeners, and the comfortable digital broadcasting environment can be provided to the listeners. Also, since the data interpolating system using the communication is employed, the digital broadcast without any interruption can be provided even under such environments in which a mobile object is driven in a tunnel where broadcast waves can be hardly reached, and also the mobile object is sandwiched between trucks.

Other objects, features and advantages of the invention will become apparent from the following description of the embodiments of the invention taken in conjunction with the accompanying drawings.

### BRIEF DESCRIPTION OF THE DRAWINGS

Fig. 1 is a functional structural diagram for showing a digital broadcasting interpolation system in accordance with the present invention.

Fig. 2 is a conceptional diagram for explaining process operations of the digital broadcasting interpolation system according to the present invention.

Fig. 3 illustratively shows a broadcasting data format employed in the digital broadcasting interpolation system according to the present invention.

Fig. 4 is a structural diagram of an encoder of a contents distributing station.

Fig. 5 is a detailed structural diagram of a contents encoder.

Fig. 6 is another detailed structural diagram of the contents encoder.

Fig. 7 is a detailed diagram of a TS packet.

Fig. 8 is a flow chart for describing process operations of the contents encoder with respect to non-real time contents.

Fig. 9 is a flow chart for explaining process operations of the contents encoder with respect to real time contents.

Fig. 10 is a structural diagram for indicating a data interpolation platform according to a first embodiment of the present invention.

Fig. 11 is a structural diagram of a decoder.

Fig. 12 is a flow chart for explaining data interpolation processing operations.

Fig. 13 represents an example of a relationship between strengths of electromagnetic waves and wave dropout predictions.

Fig. 14 is a flow chart for describing data interpolation process operations executed on the side of a receiving terminal according to a first embodiment of the present invention.

Fig. 15 is a structural diagram of a receiving terminal according to a second embodiment with employment of the present invention.

Fig. 16 is a structural diagram for representing a data interpolation platform in the second embodiment.

Fig. 17 is a flow chart for explaining a digital broadcasting interpolation process operation executed when the communication is used in the second embodiment.

Fig. 18 is a structural diagram of a receiving terminal according to a third embodiment with employment of the present invention.

Fig. 19 is a detailed diagram for indicating a data interpolation platform according to a third embodiment of the present invention.

Fig. 20 is a structural diagram for showing a modification of the third embodiment with employment of the present invention.

Fig. 21 is a timing chart for explaining a data interpolating method.

Fig. 22 is a diagram for indicating an encoding process operation of data multiplexing operation.

Fig. 23 is a block diagram for showing a decoding operation of multiplexed data in a receiving terminal.

Fig. 24 is a schematic diagram for showing a function display screen of a digital broadcast under normal condition.

Fig. 25 is a schematic diagram for indicating a function display screen of the digital broadcast when an instantaneous interruption of the digital broadcast happens to occur, and when the digital broadcast is recovered from the instantaneous interruption.

Fig. 26 is a detailed diagram for indicating a data interpolation platform in a fourth embodiment of the present invention.

### DESCRIPTION OF THE EMBODIMENTS

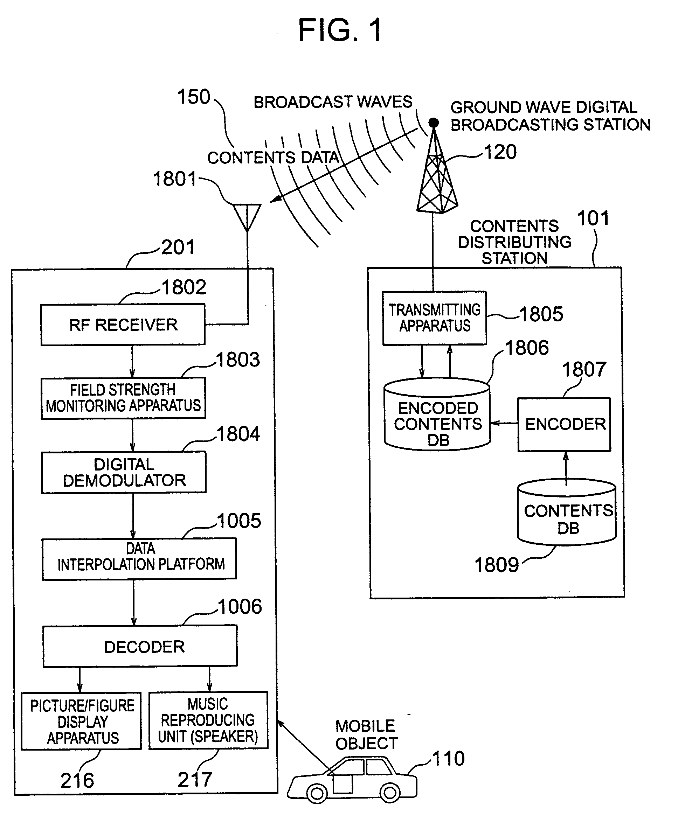

Referring now to drawings, various embodiments of the present invention will be described. Fig. 1 is a schematic diagram of a digital broadcasting interpolation service system with employment of the present invention. This digital broadcasting interpolation service system is arranged by a contents distributing station 101, a ground wave digital broadcasting station 120, a mobile object 110 which is typically known as an automobile, and contents data which is broadcasted by using the ground wave digital broadcast. It should be noted that in the below-mentioned embodiment, such a service in the case that the ground wave digital broadcast is employed is described as a broadcasting means defined from the contents distributing station 101 up to the mobile object 110. However, as will be discussed later, this may be applied to another service with employment of a communication satellite, a broadcast satellite, or a long elliptic orbit satellite capable of performing a bidirectional communication.

Next, a description will now be made of a structure of a mobile receiving terminal 201 mounted in the mobile object 110, and an arrangement of the contents distributing station 101. The contents distributing station 101 is equipped with a transmitting apparatus 1805, an encoder 1807, a contents DB (Database) 1809, and an encoded contents DB 1806. The transmitting apparatus 1805 transmits contents by superimposing the contents on broadcasting waves. The encoder 1807 encodes the contents. The contents DB 1809 stores thereinto contents which will be broadcasted. The encoded contents DB 1806 stores thereinto such encoded contents in such a manner that the encoded contents to be broadcasted and various data are multiplexed by a multiplexing apparatus 514 (not shown), and then, the multiplexed contents/data are converted to obtain proper data formatted for the broadcasting wave. These functions are connected to each other by way of a single bus. The data stored in the encoded contents DB 1809 is transmitted as electromagnetic waves from the contents distributing station 101 via the transmitting apparatus 1805 in response to an instruction issued from a program managing unit 252 (not shown) which manages a broadcasting sequence of programs. The data which has been transmitted from the contents distributing station 101 by using this electromagnetic wave as a medium is received by an antenna 1801 of the mobile receiving terminal 201. The mobile receiving terminal 201 is provided with an electromagnetic wave receiver (RF receiver) 1802, a field strength (strength of electromagnetic wave) monitoring apparatus 1803, a digital demodulator 1804, a data interpolation platform 1005, a decoder 106, picture/figure display apparatus 216, and a music reproducing unit (speaker) 217. The field strength monitoring apparatus 1803 monitors strengths of electromagnetic waves in a periodic manner. The digital demodulator 1804 derives digital data superimposed on the received electromagnetic waves. The data interpolation platform 1005 executes an interpolation process operation of dropout data in such a case that a dropout happens to occur in the derived data.

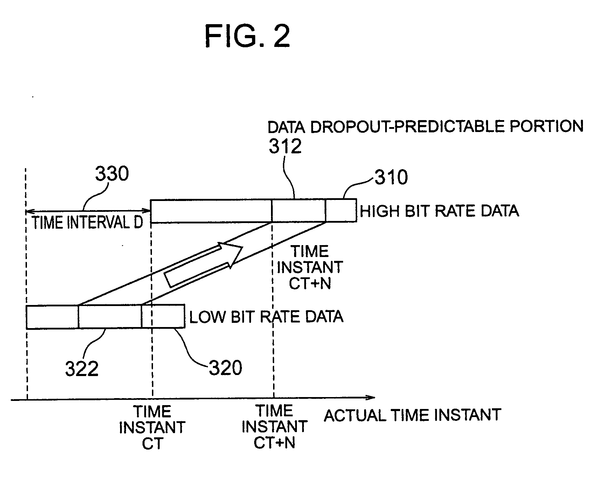

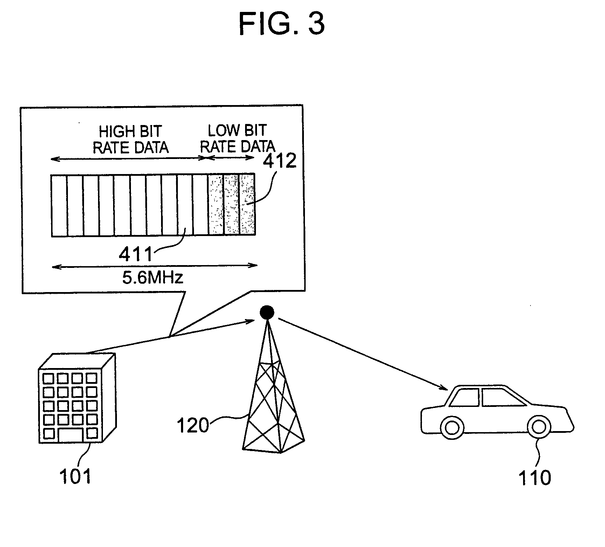

Next, as to a digital broadcast interpolating method according to a first embodiment of the present invention, both an interpolation idea thereof and an interpolation system thereof will now be explained with reference to Fig. 2 and Fig. 3. This first embodiment is such an example capable of realizing a digital broadcasting system without any interruption, while a ground wave digital broadcast is directed in which a frequency band of 5.6 MHz is subdivided into 13 segments, as shown in Fig. 3. In this embodiment, among these 13 sub-divided segments, 10 sub-divided segments are used to transfer high bit rate data 411 whereas 3 sub-divided segments are employed to transfer low bit rate data 412. While this hierarchical transfer system is employed, contents data having different qualities are transmitted between the high bit rate data 411 and the low bit rate data 412 by shifting time on the side of the contents distributing station 101 (Fig. 2). While the mobile object 110 receives the digital broadcast during mobile operation, this mobile object 110 previously predicts as to whether or not a data dropout may occur in the received data, and previously acquires such data in which the data dropout is predictable based upon this prediction. In the case that the predicted data dropout actually occurs, the interpolation process operation is quickly carried out by employing the previously acquired data, so that the digital broadcast without any interruption can be realized with respect to users. To this end, as indicated in Fig. 2, such contents data containing the same contents are transmitted from the contents distributing station as both high bit rate data 310 corresponding to high quality contents data and also low bit rate data 320 corresponding to low quality contents data in such a manner that this low bit rate data 320 may be stored into the terminal in advance by such time "D" represented by a time interval 330. Then, in such a case that when the contents data is reproduced as the high bit rate data 310 under reception, an occurrence of data reception dropout may be predicted in such a data portion shown in "312", a data portion 322 which corresponds to the portion where this data dropout is predicted within the previously received low bit rate data 320 is previously stored into a data storage area employed in the terminal. Even when the data dropout happens to occur at this data portion, the data interpolation can be quickly carried out.

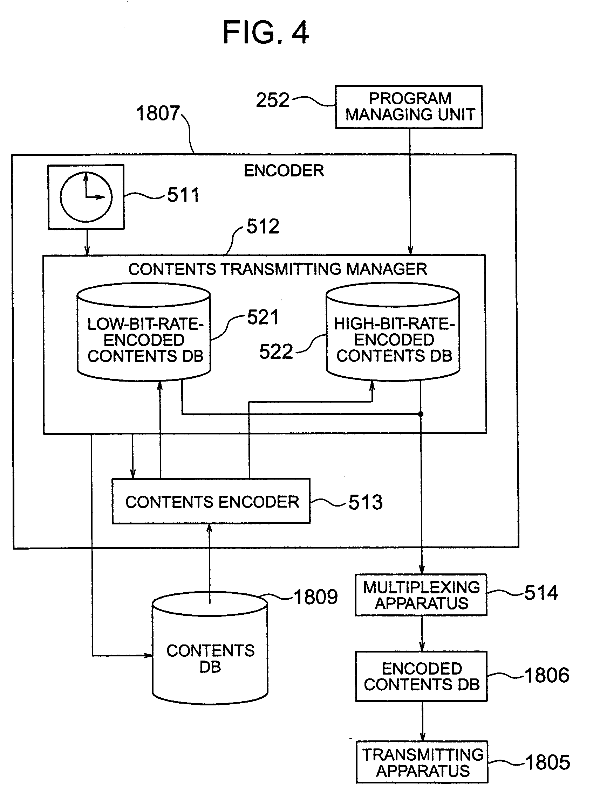

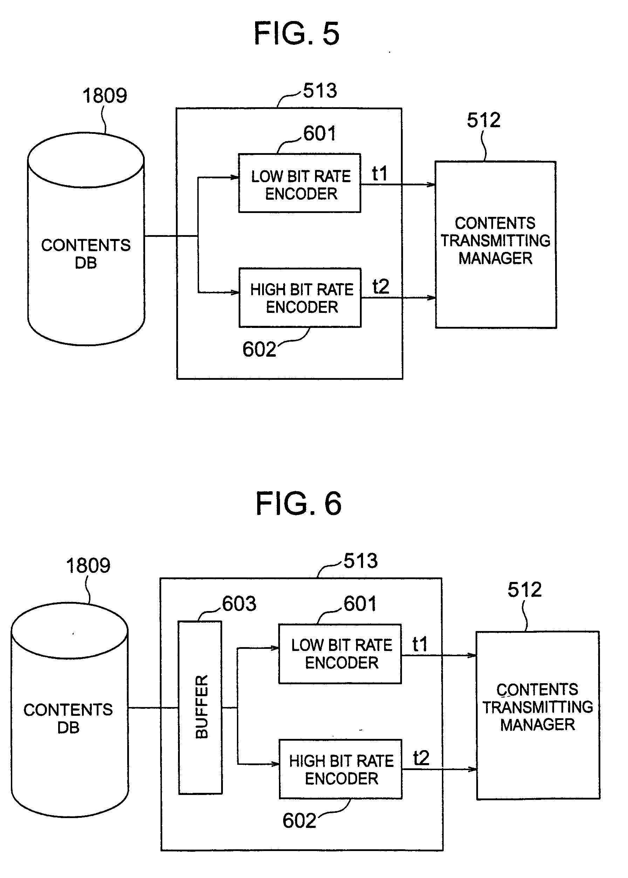

Subsequently, a structural example of a computer system used to realize the previously explained digital broadcast without any interruption will now be explained in detail. First, referring now to Fig. 4 to Fig. 8, the structure of the contents distributing station 101 is described. Fig. 4 is a structural diagram for representing in detail a peripheral unit of the encoder 1807 which is equal to an element of the contents distributing station of the present invention. The encoder 1807 is constituted by a timer 511, a contents transmitting manager 512, and a contents encoder 513. Furthermore, the contents transmitting manager 512 contains both a data storage area 521 which stores thereinto contents encoded in a low bit rate, and another data storage area 522 which stores thereinto contents encoded in a high bit rate. As indicated in Fig. 5, the contents encoder 513 is equipped with a low bit rate encoder 601 which encodes contents in the low bit rate and a high bit rate encoder 602 which encodes contents in the high bit rate. The contents which have been encoded by the corresponding encoders are stored into both the data storage area 521 for the low-bit-rate-encoded contents, and the data storage area 522 for the high-bit-rate-encoded contents. In this embodiment, the contents encoder 513 is arranged by independently employing the high bit rate encoder 602 and the low bit rate encoder 601. It should be noted that while either the same encoder program or the same hardware apparatus is employed, a parameter during encoding operation may be changed so as to very a bit rate, so that the contents data may be sequentially encoded in the high bit rate and the low bit rate. More specifically, in the case that the encode system by changing the parameter is employed, this encode system is suitable for the case that off-line contents are encoded which do not require a real-time characteristic.

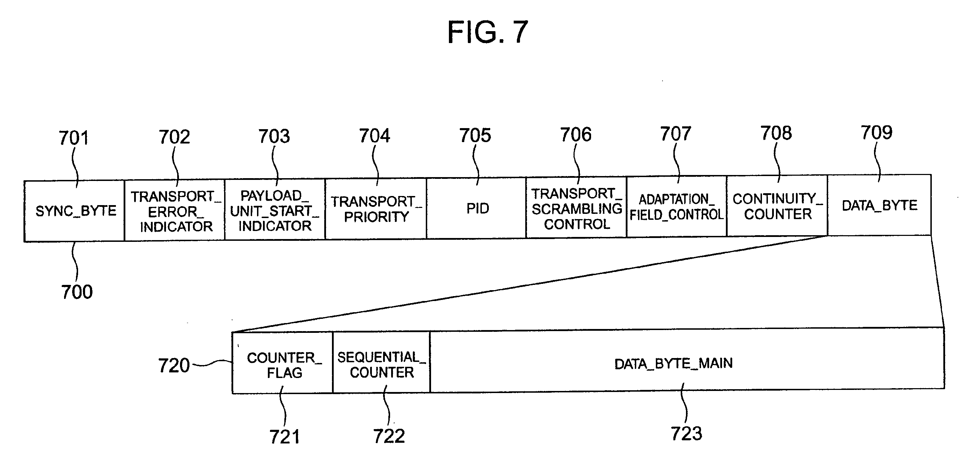

Next, an actual encoding method of contents will now be described with reference to Fig. 7. The below-mentioned digital broadcasting system is carried out in the light of the ISO/IEC international standard 13818-1 (will be referred to as an "MPEG 2000" hereinafter), while this MPEG 2000 has been standardized as the method for transmitting digital contents by superimposing the digital contents on the broadcasting waves. The MPEG 2000 employs such a format called as "MPEG2-TS" as a format used to transmit/receive broadcast data. This is such a transfer method as indicated in a transport stream 700 (will be referred to as a "TS" hereinafter) indicated in Fig. 7, while a set of data is employed as one unit, and these data are constituted by the following fields: Sync_byte 701, transport_error_indicator 702, payload_unit_start_indicator 703, transport_priority 704, PID 705, transport_scrambling_control 706, adaptation_field_control 707, continuity_counter 708, data_byte 709. First of all, in order to realize a digital broadcast without any interruption, a serial number is necessarily required to be given to this TS (transport stream 700). However, in the above-described MPEG 2000 standard, although both the PID and the values of "continuity_counter" may be used as identifiers capable of identifying the respective TSs, the numeral values of "continuity_counter" are especially defined from 0 to 15. For instance, even when the value of "continuity_counter" is changed from 4 to 6 before/after a data dropout, there is no clear method capable of judging as to whether or not only 1 piece of TS is dropped between 4 and 6, or as to whether or not 17 pieces of TSs are dropped. As a consequence, in order to reduce such uncertainty, in accordance with this embodiment, two fields made of "counter_flag 721" and "sequential_counter 722" are newly provided at a head portion of "data_byte field 709" corresponding to a payload of a TS packet (will be referred to as a "TS payload" hereinafter). Thereafter, as "data_byte_main 723", such data corresponding to the conventional field of "data_byte." As a result, it is possible to easily manage that what data is entered into which number of transport stream. Thus, the indexing operation may be readily carried out while the data interpolation is carried out when the data dropout happens to occur.

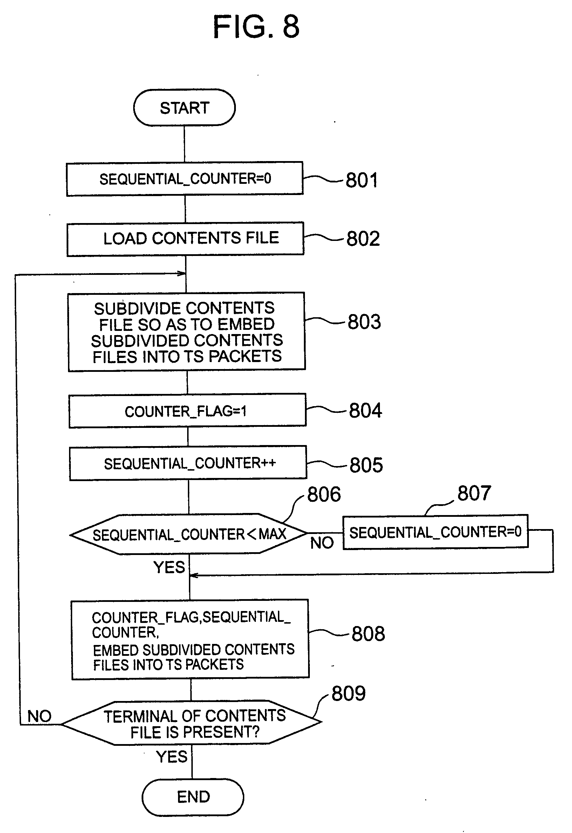

Referring now to a flow chart of Fig. 8, a description is made of a sequential operation in the case that contents data is encoded by the contents encoder 513. Fig. 8 indicates a sequential process operation executed in the case that such contents data which requires no real-time characteristic is encoded. First of all, in a process step 801, the above-described "sequential_counter" corresponding to the serial number is initialized to be 0. Next, a file of contents data which should be encoded is loaded from the contents DB 1809 in a process step 802. Then, in a process step 803, the contents data is subdivided in order that a size of the subdivided content data may be fitted to the dimension of the payload of the TS packet in accordance with the above-described MPEG 2000 standard. Next, in a process step 804, "1" is set to "counter_flag" which corresponds to an identifier capable of recognizing such a fact that the serial number is entered into "sequential_counter." It should be understood that the value of "counter_flag" is equal to "0", or "1." When this value is equal to "0", this value indicates that the serial number is not entered into the field of "sequential_counter", whereas when this value is equal to "1", this value indicates that the serial number is entered into the field of "sequential_counter." After the value of "sequential_counter" is incremented by 1 in a process step 805, a check is made as to whether or not the value of "sequential_counter" is smaller than a MAX value which has been previously determined based upon the size of contents in a process step 806. In general, this MAX value is determined based upon both a total data size of contents and a payload size. In such a case that the value of "sequential_counter" is smaller than this MAX value, in a process step 808, the respective values of "counter_flag" and "sequential_counter" and the data of the contents file derived in the previous process step 803 are set to the TS packet, and the resultant contents data is encoded by either the low bit rate encoder 601 or the high bit rate encoder 602 in accordance with a bit rate of an encoding operation. Thereafter, the encoded contents data is stored into either the low-bit-rate-encoded contents storage area 521 or the high-bit-rate-encoded contents storage area 522. In such a case that the value of "sequential_counter" is larger than the MAX value, this value of "sequential_counter" is initialized in a process step 807. In this embodiment, the initial value is set to "0." Next, a check is made as to whether or not the contents file which should be encoded is reached to a terminal. If the contents file is not reached to the terminal, then the process operations defined after the process step 803 are repeatedly carried out with respect to the portion subsequent to the contents. To the contrary, in the case that the contents file is reached to the terminal, the encoding operation is ended.

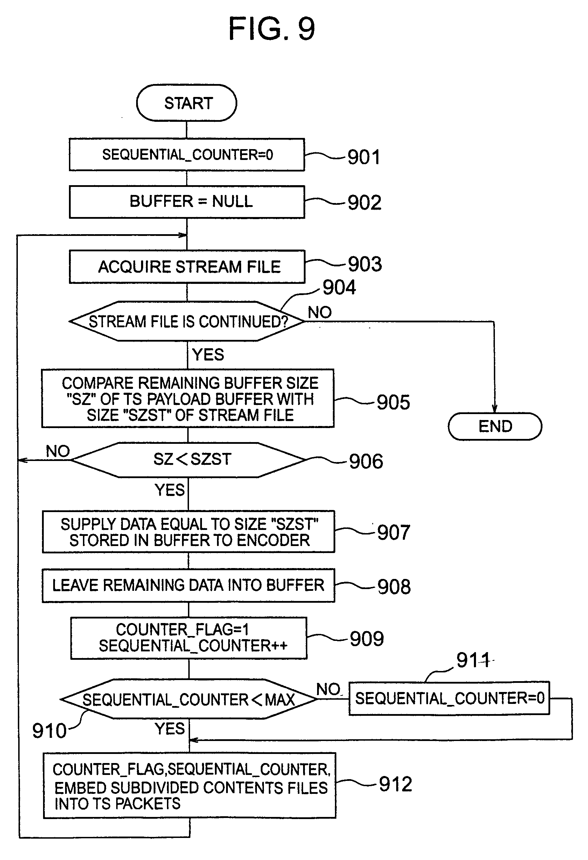

The encoding method of the contents shown in Fig. 5 corresponds to such a case that the real time characteristic is not required with respect to the contents. On the other hand, as contents of a digital broadcasting system, there is a live broadcast typically known as a traffic jam picture and a sports relay broadcast. In the case that such contents representative of the live broadcast are encoded, the streaming distribution can be hardly carried out in real time by executing the encoding method of Fig. 8. As a result, as represented in Fig. 6, a buffer 603 having a storage capacity capable of temporarily storing thereinto streaming data for several seconds is provided in the contents encoder 513, the streaming contents are encoded in accordance with a sequential operation indicated in Fig. 9. It should be noted that a remaining data amount storable in the buffer 603 is assumed as "SZ."

First, in a process step 901, the value of "sequential_counter" is initialized to "0." Thereafter, the set buffer 603 is initialized to "null" in a process step 902. Next, in a process step 903, a stream file of a live broadcast which is transmitted from a live camera, or the like via a network is fetched into the contents encoder 513. Next, a judgement is made as to whether or not the stream file is ended in a process step 904. In this case, when the stream file is ended, namely the live broadcast is accomplished, the encoding process operation is completed. To the contrary, in the case that the live broadcast is continued, the remaining data amount "SZ" (namely, data amount can be stored in payload buffer 603 of TS packet shown in Fig. 6) is compared with a size (SZST) of the fetched stream file in a process step 905. As a result of this comparison process, when it is so judged that SZ>SZST in a process step 906, since the set buffer 603 may still have an empty storage area, the encoding process operation is returned to the previous process step 903 in which the streaming data is again read. To the contrary, when it is so judged that SZ<SZST, since the buffer 603 owns no empty storage area, the data which have been stored in the buffer 603 and correspond to the amount of SZST are derived from the buffer 603 in such a deriving order that the data arrived at earlier stages are sequentially derived. The derived data are sequentially supplied to the contents encoder 513 in a process step 907. Next, after the storage content of the buffer 603 is once cleared, the data of such a stream file whose size was larger than the remaining data amount SZ in the process step 907 is stored into the buffer.

Then, in a process step 909, the value of "sequential_counter" is incremented by "1", and the value of "counter_flag" is set to "1." Thereafter, in a process step 910, a judgment is made as to whether or not the value of "sequential_counter" is smaller than the previously set MAX value. When it is so judged in the process step 910 that the value of "sequential_counter" is smaller than the MAX value, the value of "sequential_counter", the value of "counter_flag", and the encoded contents are set to the ST packet in a process step 912. When it is so judged in the process step 910 that the value of "sequential_counter" is larger than the MAX value, the value of "sequential_counter" is initialized in a process step 911, and thereafter, the encoding process operation is advanced to a process step 912.

The foregoing description corresponds to such an explanation that the contents are transmitted. The below-mentioned explanation is an embodiment of a mobile object receiving terminal 201. That is, while receiving the above-described data broadcast having the value of "sequential_counter" contained in the TS packet, even when a data dropout happens to occur due to an instantaneous interruption, the contents of the data can be displayed as well as reproduced without any interruption of the data on the mobile object receiving terminal 201.

First, a first embodiment will now be explained. As indicated in Fig. 1, this mobile object receiving terminal 201 is provided with an antenna 1801, an RF receiver 1802, an field strength monitoring apparatus 1803, a digital demodulator 1804, a data interpolation platform 1605, a decoder 1006, a picture/figure display apparatus 216, and also a music reproducing unit (speaker) 217. As the antenna 1801, a parabola antenna, a Yagi antenna, a diversity antenna, and the like are employed which are normally used. Both the RF receiver 1802 and the digital demodulator 1804 correspond to a broadcast receiving module and a demodulator, which are normally used. As will be explained later, the decoder 1006 corresponds to such an apparatus for acquiring/converting desirable data from various data such as an encoded picture, an encoded voice, an encoded still picture (image), an encoded character/figure, an encoded caption, encoded map data, and encoded navigation data. The broadcast data which has been received/decoded is connected by a signal line as shown in Fig. 1, and then, is outputted from the picture/figure display apparatus 216, and the music reproducing unit (speaker) 217.

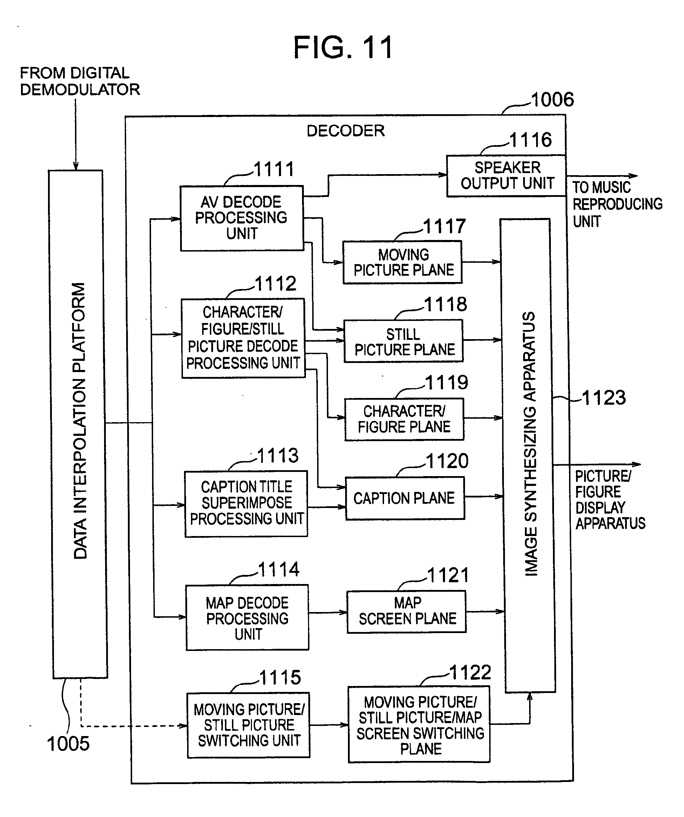

Fig. 11 schematically shows an example of a detailed structure of the decoder 1006. The decoder 1006 allocates data which pass through the data interpolation platform 1005 to desirable decoding process units based upon the respective contents identification IDs in accordance with the above-explained MPEG 2000 standard. In this embodiment, the data are allocated to an AV decoding process unit 1111, a character/figure/still picture decoding process unit 1112, a caption character superimposing process unit 1113, and a map decoding process unit 1114 with respect to a sort of data. In addition to these processing units, another decoding process unit capable of decoding point of interest (POI), traffic jam information expressed by binary data, and an alarm related to emergency information may be employed. The data processed by the respective processing units are supplied to various output apparatus, for instance, drawing planes suitable for output apparatus of the respective terminals. In the decoder 1006 of this embodiment, the following planes are provided, namely, a speaker output unit 1116, a moving picture plane 1117, a still picture plane 1118, a character/figure plane 1119, a caption plane 1120, and a map screen plane 1121. Since such information which should be simultaneously superimposed with each other to be outputted is mixed with each other, or such information which should be independently outputted is mixed with each other among these planes, all of the above-described information may be manually switched in a moving picture/still picture switching unit 115, and then, screen switching information is judged in a moving picture/still picture/map screen switching plane 1122. Alternatively, all of the above-explained information may be automatically judged based upon data supplied from the data interpolation platform 1005. After a synthesized screen is produced by a screen synthesizing apparatus 1123, this synthesized screen is outputted to the picture/figure display apparatus 216.

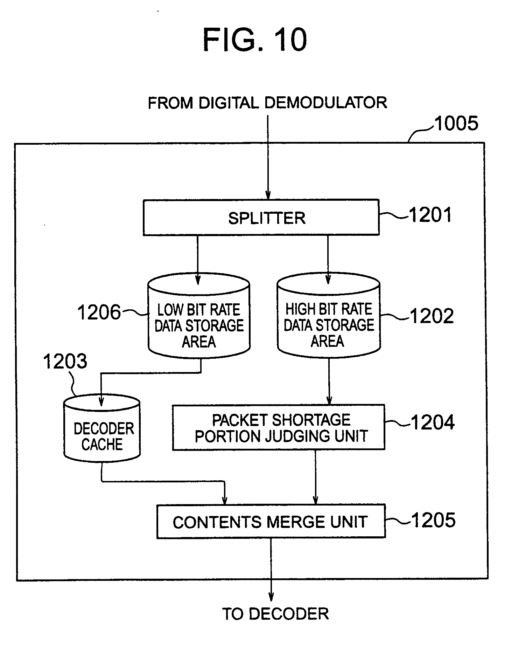

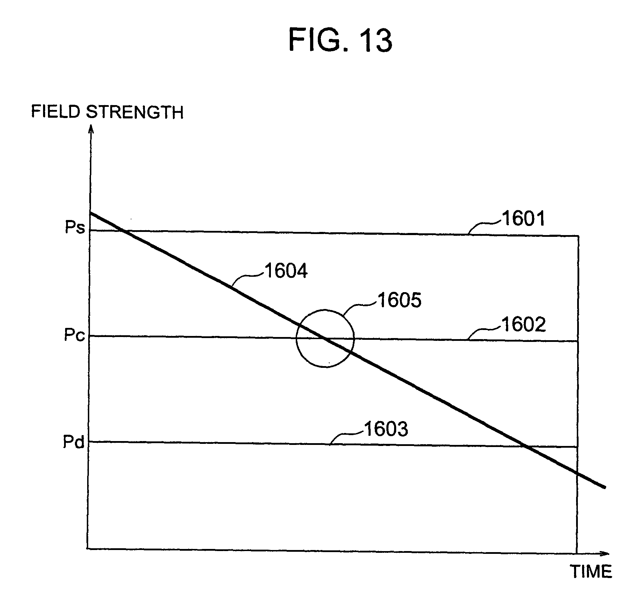

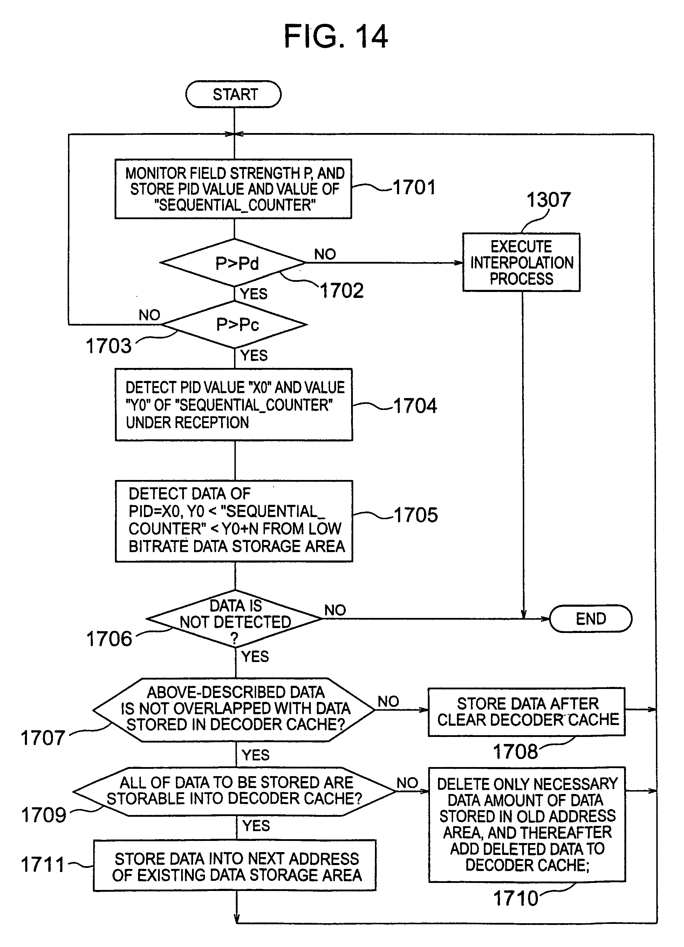

Next, the data interpolation platform 1005 will now be explained. The data interpolation platform 1005 is arranged by, as represented in Fig. 10, a splitter 1201, a high bit rate data storage area 1202, a decoder cache 1203, a packet shortage portion judging unit 1204, and a contents merge unit 1205, and also, a low bit rate data storage region 1206. The splitter 1201 splits such data which is produced by multiplexing data having different bit rates with each other in the multiplexing apparatus 514 of Fig. 4 into various data every bit rate in a demultiplexing manner. The high bit rate data storage area 1202 temporarily stores thereinto the contents encoded in the high bit rate. The decoder cache 1203 temporarily stores thereinto a necessary portion of contents which are encoded in the low bit rate for an interpolation purpose. The packet shortage portion judging unit 1204 detects a data dropout. The contents merge unit interpolates the dropped data in the case that the occurrence of the data dropout is detected by the packet shortage portion judging unit 1204. The low bit rate data storage area 1206 temporarily stores thereinto the contents encoded in the low bit rate. Referring now to Fig. 13 and Fig. 14, such a data processing method executed by the terminal having such a structural arrangement will now be described. That is, when the data dropout happens to occur due to the instantaneous interruption, this terminal executes the data processing method so as to provide the digital broadcast without interruption to broadcast listeners.

Fig. 13 graphically represents a relationship between strength levels of electromagnetic waves and time, which are defined in this embodiment. As strengths of electromagnetic waves, three steps of levels are set, namely, a safe level "Ps" indicated by 1601, an attention level "Pc" denoted by 1602, and a danger level "Pd" shown by 1603. Apparently, more than these three levels of the field strengths (electromagnetic wave strengths) may be precisely set. Also, a solid line 1604 shown in Fig. 13 indicates a change contained in field strengths. As to a relationship between field strengths and reception conditions of a digital broadcast, the digital broadcast can be received without any problem at the safe level "Ps", and the digital broadcast may be received without any problem even at the attention level "Pc." However, at the above-explained attention level "Pc", although the digital broadcast may be received without any problem at the attention level "Pc", when the strengths of the received electromagnetic waves are largely lowered at this attention level "Pc", this level indicates that the reception of the digital broadcast cannot be carried out. The danger level "Pd" implies such a level that when the field strength is reached to this danger level, the digital broadcast cannot be completely received. In accordance with the data processing method of this embodiment, in the case that the received field strength of the digital broadcast becomes lower than 1605, namely becomes the attention level, a data dropout which will occur in future due to an instantaneous interruption is predicted. Then, such data for an interpolation purpose is previously acquired by employing the hierarchical transfer system for such a preparation that a data dropout happens to occur.

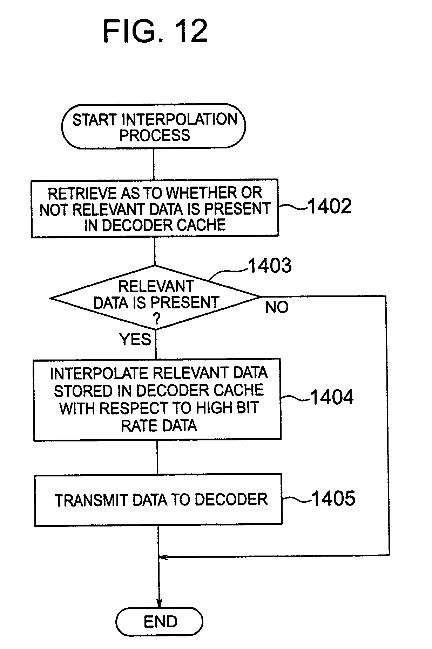

A concrete processing method will now be explained with reference to Fig. 14. First, the data sent from the digital demodulating unit 1804 is separated into both high bit rate data and low bit rate data by the splitter 1201, and then, the high bit rate data is stored in the high bit rate data storage area 1202 and the low bit rate data is stored in the low bit rate data storage area 1206. Thereafter, the field strength monitoring apparatus 1003 detects a monitored value of a field strength (strength of electromagnetic wave) "P" under monitor (process step 1701). Then, a check is made as to whether or not the monitored field strength "P" is entered into the danger area "Pd" in a process step 1702. When the monitored field strength "P" is not entered into the danger area "Pd", this process operation is advanced to a further process step 1703. When the monitored field strength is entered into the danger area "Pd", it may be predicted that the data dropout already occurred due to the instantaneous interruption of the data reception, or the occurrence possibility of such datadrop becomes high. As a result, the interpolation process operation 1307 (see Fig. 12) is carried out. In the case that it is not so judged in the process step 1703 that the field strength is entered into the attention area "Pc", the process operation is returned to the previous process step 1701 at which the process operation is repeatedly carried out. To the contrary, when it is so judged that the field strength is entered into the attention area "Pc", since it is so predicted that the data dropout caused by the instantaneous interruption will occur in future, the process operation is advanced to such process steps subsequent to a process step 1704.

In the process step 1704, a detection is made of both a PID value (x0) of broadcast contents under reception and a value of "sequential_counter" (y0). Next, in a process step 1705, a retrieving operation is carried out as to whether or not the following low bit rate contents data is present. In this low bit rate contents data, PID contained in the decoder cache 1203 is equal to "x0", and also the value of "sequential_counter" is located between y0 and y0+N. In this formula, symbol "N" indicates a predetermined offset value which is defined by considering contents processing time required when an instantaneous interruption happens to occur. Also, this offset value is such a value which is manually set when a software program is installed in a terminal. Next, in a process step 1706, a check is made as to whether or not the above-explained dropout-predictable data is present in the decoder cache 1203. When such dropout-predictable data is not present in the decoder cache 1203, the data interpolation process operation is ended in this embodiment.

It should be understood that in the below-mentioned embodiment by combining a communication therewith, a shortage of contents data may be acquired via either a portable telephone or a modem, which is connected to the terminal. When the above-described dropout-predictable data is present, such a retrieving operation is carried out in a process step 1707 by checking as to whether or not this dropout-predictable data is not overlapped with the low bit rate data which has already been stored in the decoder cache 1203 based upon the value of "sequential_counter." In the case that there is such data whose values of "sequential_counter" are overlapped with each other, the content of the decoder cache is cleared in a process step 1708. Thereafter, the retrieved data is stored. To the contrary, a confirmation is made as to whether or not all of data which should be stored can be stored into the decoder cache in a process step 1709. In the case that all of these retrieved data can be stored in the decoder cache, these data are stored in this decoder cache in a process step 1711. To the contrary, when all of the retrieved data cannot be stored into the decoder cache, only necessary amounts of data which own the old values of "sequential_counter" are deleted, and then, the retrieved data are stored into this empty region of this decoder cache in a process step 1710. This process operation is repeatedly carried out until an end of the contents data, or until the power supply of the terminal is turned OFF.

Next, an interpolation process operation 1307 will now be explained with reference to the flow chart of Fig. 12. First, when a data dropout is detected, a retrieving operation is carried out in a process step 1402 as to whether or not such low bit rate data having a value of "sequential_counter" which corresponds to the dropped TS packet is present in the decoder cache 1203. As a result of this retrieving operation, when it is so confirmed that such low bit rate data is present in a process step 1403, the corresponding low bit rate data is loaded in the data interpolation platform, the above-explained header information such as "sequential_counter" and "counter_flag" is deleted, and thereafter, the contents data is derived in a process step 1404. In a process step 1405, this derived contents data is transferred to the decoder.

In the case that the existence of this data in the decoder cache 1203 is not confirmed in the process step 1403, the data interpolation only by the broadcasting waves is not executed. In this case, as will be explained in a fourth embodiment, the above-explained shortage of data may be acquired via a communication.

As previously described, in accordance with the first embodiment of the present invention, while the dropout of the digital data is predicted based upon the strengths of the electromagnetic waves (field strengths), the interpolated digital data is supplied to the output apparatus. As a consequence, the listeners can enjoy the digital broadcasts under comfortable conditions without having unpleasant feelings caused by the data interruptions.

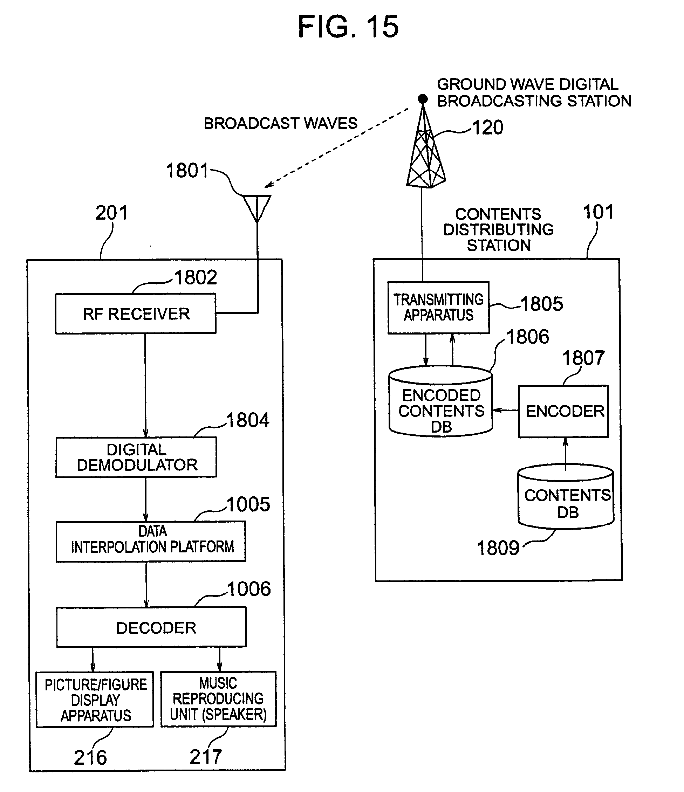

Next, a receiving terminal 201 according to a second embodiment of the present invention will now be described. In the receiving terminal 201 of this second embodiment, data dropouts caused by an instantaneous interruption may be detected by a discontinuity of values of "sequential_counter" contained in a TS packet. As represented in Fig. 15, the receiving terminal 201 is arranged by an antenna 1801, an RF receiver 1802, a digital demodulator 1804, a data interpolation platform 1005, a decoder 1006, a figure display apparatus 216, and also a music reproducing unit (speaker) 217. As the antenna 1801, a parabola antenna, a Yagi antenna, a diversity antenna, and the like are employed which are normally used. Both the RF receiver 1802 and the digital demodulator 1804 correspond to a broadcast receiving module and a demodulator, which are normally used. As will be explained later, the decoder 1006 corresponds to such an apparatus for acquiring/converting desirable data from various data such as an encoded picture, an encoded voice, an encoded still picture (image), an encoded character/figure, an encoded caption, encoded map data, and encoded navigation data. The received broadcast data is outputted from the figure display apparatus 216 and the music reproducing unit (speaker) 217, which are connected via a signal line to the decoder 1006.

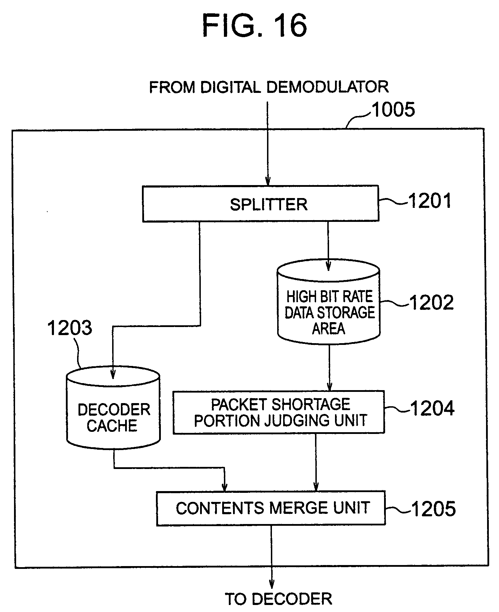

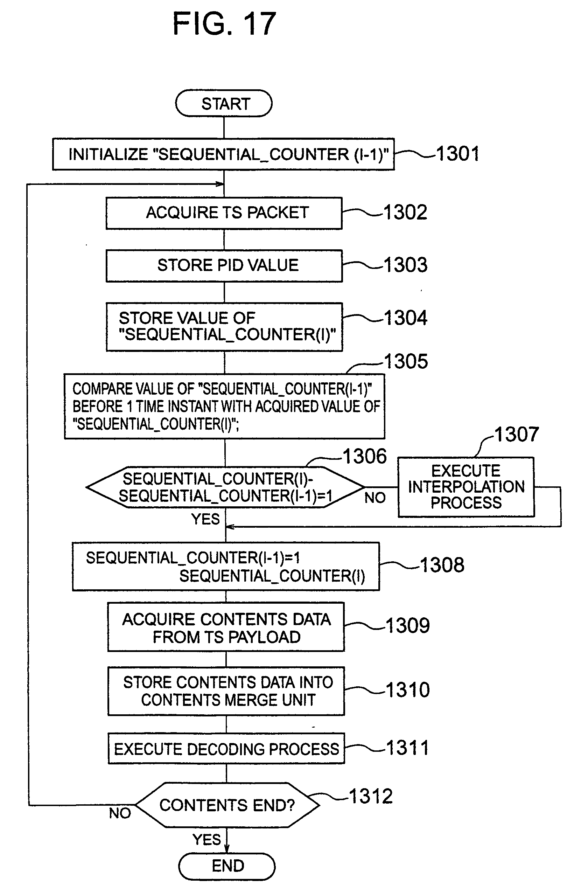

Referring now to Fig. 16 and Fig. 17, a data processing method executed in the above-described receiving terminal 201 having such an arrangement will be described in order that when a data dropout due to an instantaneous interrupt happens to occur, this receiving terminal 201 may provide the digital broadcast without any interrupt to listeners. As previously explained, in the receiving terminal of the second embodiment, the discontinuity of the values of "sequential_counter" contained in the TS packet is judged so as to detect the data dropout caused by the instantaneous interrupt. As a result, first of all, under initial condition, the value of "sequential_counter" acquired at one preceding time instant is initialized in a process step 1301. Thereafter, a TS packet transmitted by the digital broadcast is acquired. At this time, while data having a high bit rate, namely such data which is mainly heard by a listener is stored into the high bit rate data storage area 1202 employed in the data interpolation platform shown in Fig. 16, such data which is normally employed for executing the interpolation, namely corresponding to the low bit rate data is acquired by the splitter 1201, and thereafter, is stored into the low bit rate data storage area 1206 in order to increase access speeds when the data interpolation is carried out. Thereafter, the low bit rate data is stored into the decoder cache 1203. If a data access speed of a low bit data storage area is equal to a data access speed of a decoder cache, then the high bit rate data storage area 1203 and the low bit rate data storage area 1206 may be made identical to each other. Next, in a process step 1303, a PID value is acquired from the data which have been stored in the above-explained data storage area in order to judge as to whether or not program data is switched.

In the next process step 1304, a value of "sequential_counter(i)" at a present time instant "i", which is added in the contents distributing station, is acquired from a payload portion of the TS packet. In this case, this value of "sequential_counter(i)" is compared with a value of "sequential_counter(i-1)" which has been acquired before this presently-acquired value of "sequential_counter(i)", and a calculation is made as to whether or not a difference between these two values is equal to "1" in a process step 1305. When this difference is not equal to "1" in a process step 1306, a data dropout may occur in the TS packet between them. As a consequence, a data interpolation process operation is carried out in the interpolation process operation 1307. It should also be understood that contents of this interpolation process operation are the same as previously explained in the first embodiment. However, in this interpolation process operation 1307, in such a case that such a confirmation is made that the low bit rate data corresponding to the dropped TS packet is present in the decoder cache in the process step 1403, the data interpolation operation is not carried out by using only broadcast waves. In such a case, as will be discussed in a fourth embodiment, the above-described shortage of data is acquired via the communication. When the difference between the values of "sequential_counter" is equal to "1", a value of "sequential_counter" at the present time instant is stored in a process step 1308. Thereafter, contents data is derived from the payload of the TS packet in a process step 1309. In a process step 1310, the derived contents data is stored into the contents merge unit. Next, in the decoding process unit 1311, the contents data stored in the buffer is decoded. In this decoding process unit 1311, the respective contents data are transmitted to the properly selected decoders within the above-explained decoders 1006 with respect to each of the sorts thereof based upon the contents IDs which are embedded in the data. In the case that the data stored in the buffer is smaller than the above-explained constant value, the process operation is returned to the previous step 1302 in which next contents data is acquired. This operation is repeatedly carried out until it is so judged that the contents are ended in the process step 1312.

In accordance with the terminal for receiving the digital broadcast according to the second embodiment, the dropout of the TS packet is judged based upon the values of "sequential_counter" embedded in the TS packet, and the continuity thereof is judged by the data interpolation platform 1005. As a consequence, even when the data dropout due to the instantaneous interruption of the received digital broadcast happens to occur, since the dropped data may be interpolated by employing the low bit rate data which have been previously stored in the receiving terminal, this receiving terminal may provide such a digital broadcast without any interruption to the listeners.

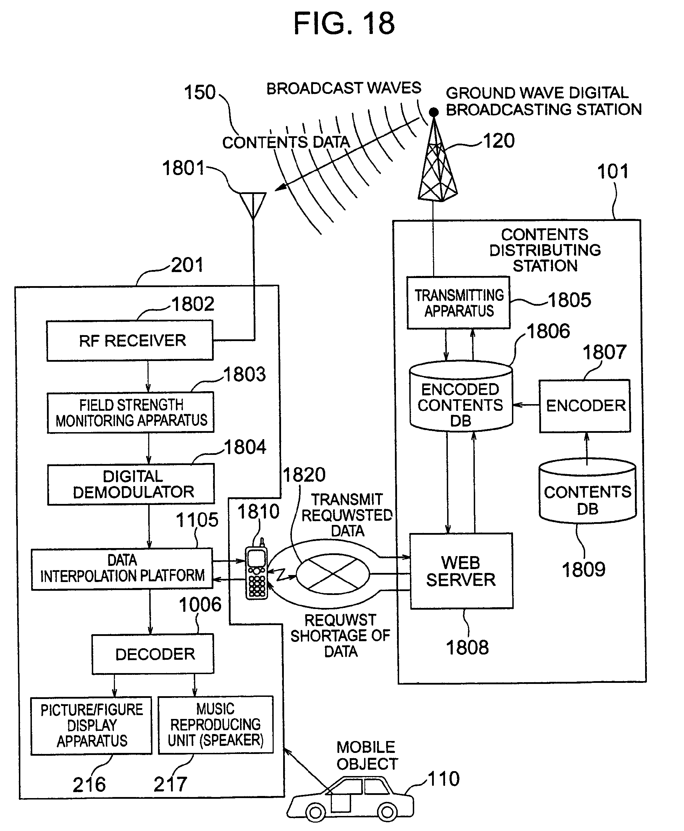

Next, as a third embodiment of the present invention, the following data interpolation will now be explained with reference to Fig. 18 in such a manner that data which is dropped due to an instantaneous interruption of a digital broadcast is interpolated via another communication medium.

Fig. 18 is a functional structural diagram for schematically indicating one example of a digital broadcasting interpolation system in which a contents distributing station 101 is connected to a mobile object 110 via not only a broadcast, but also a communicate appliance 1810 using a portable telephone and a modem and so on, and a data interpolation is carried out via the communication appliance 1810. The contents distributing station 101 is equipped with a transmitting apparatus 1805, an encoded contents DB (database) 1806, an encoder 1807, a contents DB 1809, and a Web server 1808. It should be noted that the above-described encoded contents DB 1806, encoder 1807, and contents DB 1809 are similar to those described in the first embodiment. Also, an on-vehicle terminal 201 is arranged by an antenna 1801, an RF receiver 1802, a field strength monitoring apparatus 1803, a data interpolation platform 1005, a picture/figure display apparatus 216, a music reproducing unit (speaker) 217, and the communication appliance 1810. The contents distributing station 101 owns the following different point from that of the above-described first embodiment. That is, while a communication network 1820 which is typically known as the Internet is connected the Web server 1808 employed in the contents distributing station 101, a bidirectional communication may be carried out between the portable telephone 1810 and this contents distributing station 101. The on-vehicle terminal 201 is equipped with the portable telephone 1810.

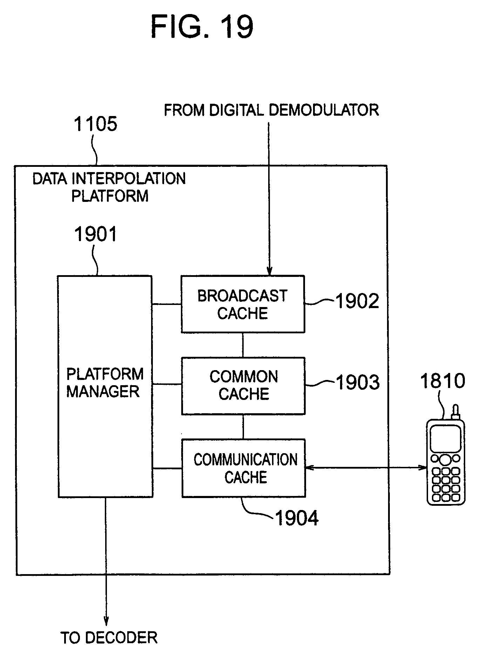

An arrangement of the data interpolation platform 1105 employed in the on-vehicle terminal 201 will now be explained with reference to Fig. 19. This data interpolation platform 1105 is equipped with a platform manager 1910, a communication cache 1904, and a broadcast cache 1902. The platform manager 1901 owns a function capable of detecting a dropout of broadcast data, and also a function capable of interpolating these dropped broadcast data. The communication cache 1904 caches data which is acquired via the communication. The broadcast cache 1902 caches data which is entered from the digital demodulator 1804 via the broadcast. Then, this data interpolation platform 1105 is further provided with a common cache 1903 in which a comparing operation is furthermore carried out as to the above-described PID of the TS packet and the value of "sequential_counter", which are related to the contents of such data stored in both the communication cache 1904 and the broadcast cache 1902 (in this case, data stored in these caches) in order to detect as to whether or not digital data is dropped, and also when it is so detected that this digital data is dropped, the data interpolation is carried out. The communication cache 1904 is connected to the communication appliance 1810 which is typically known as a portable telephone and a modem. The data which are united by the common cache 1903 are supplied to an output apparatus in response to an instruction of the platform manager 1901.

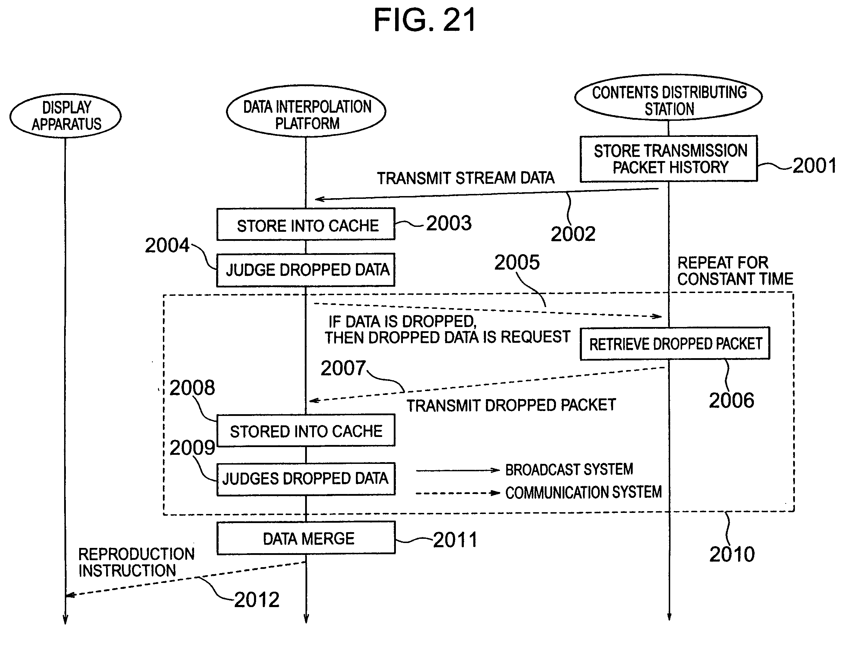

Next, by referring to Fig. 21, a description will now be made of a detailed interpolation method capable of executing a digital broadcast interpolation method by employing the communication shown in Fig. 18. Since the process operation for predicting the data dropout due to the instantaneous interruption of the digital broadcast is similar to that of the above-explained first embodiment, various functions subsequent to this data dropout prediction in the below-mentioned descriptions will be explained.

In the contents distributing station 101 of Fig. 18, when a stream broadcasting operation is carried out, a storage history of TS packets which have been transmitted is previously saved in a process step 2001 of Fig. 21. This storage history of the transmitted TS packets may be realized by executing such an operation that time required to transmit stream data from the contents distributing station and the value of "sequential_counter" of the above-described TS packet are stored in a storage apparatus. While the history is stored as explained above, as indicated in a process step 2002, the stream data is broadcasted from the contents distributing station with respect to the on-vehicle terminal. In this case, the broadcasted stream data is stored in the above-explained broadcast cache 1902 provided on the side of the on-vehicle terminal 201 (process step 2003). Thereafter, in response to an instruction issued from the platform manager 1901, a judgement is made as to whether or not an occurrence of a dropout of received data is predicted based upon the information supplied from the field-strength monitoring apparatus 1803 (process step 2004). When the occurrence of the data dropout is predictable, the predictable dropout packet is requested with respect to the contents distributing station 100 in a communication process step 2005. A quality of data requested in this case may be flexibly changed in accordance with a busy condition of a communication line, and a contract condition of a digital broadcast. At this time, a request method may be realized by designating the below-mentioned URL, while using a function (referred to as "CGI (Common Gateway Interface") of a general-purpose Web server:
"http://webserver.hogehoge.com/cgi-bin/getData?start_id=00000&end_id=00030"

This URL implies as follows: Symbol "http://webserver.hogehoge.com/cgi-bin" indicates an address of a Web server of a contents distributing station in which a program used to perform a data interpolation is located; symbol "getData" shows a program used to get data which should be interpolated; symbol "start_id" represents a starting packet number ("sequential_counter") of the data which should be interpolated; and symbol "end_id" indicates an end packet number of the data which should be interpolated. As apparent from the foregoing description, since this is one of representations used to acquire the data, other representing methods, or other language processing systems such as Java, Applet, and JavaScript may be employed.

The data which has been acquired in such a manner is acquired (process step 2007) via the communication appliance 1810, and then, the acquired data is stored into the communication cache 1904 (process step 2008). Since slight time is required during this process operation, another judgement is made as to whether or not new data dropout may be predicted during this process operation in a process step 2009. The above-described process operations are repeatedly carried out, namely a range 2010 surrounded by a dot line in Fig. 21 is repeatedly carried out for a constant time duration during which contents are distributed, or for a constant time during which the power supply of the terminal is turned ON. Thereafter, in response to an instruction issued from the platform manager 1901, in the case that the data dropout actually occurs, the data stored in the broadcast cache is merged with the data stored in the communication cache in a process step 2011. Then, the merged data is decoded by way of a process step 2012, and thereafter, the decoded data is supplied to the display apparatus.

In accordance with the above-described on-vehicles terminal of the third embodiment of the present invention, while the data-dropout predictable data is previously acquired via the communication from the contents distributing station by predicting the occurrence of the dropout of the broadcast electromagnetic wave, the data interpolation operation can be quickly carried out in such a case that the data dropout caused by the instantaneous interruption actually occurs. As a consequence, the digital broadcast without any interruption can be provided to the listeners, and the comfortable digital broadcasting environment can be provided to the listeners. Also, since the on-vehicle terminal of the third embodiment is the data interpolating system using the communication, the digital broadcast without any interruption can be provided even under such environments in which the mobile object is driven in a tunnel where broadcast waves can be hardly reached, and also the mobile object is sandwiched between trucks.

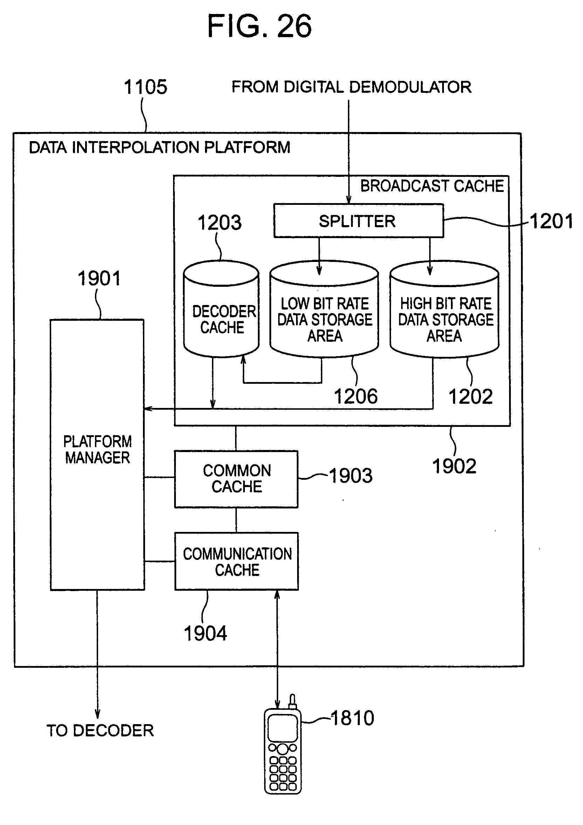

It should also be noted that in the above-explained first embodiment, second embodiment, and third embodiment, the data interpolation operations have been independently carried out by employing only either the communication or the broadcast. In accordance with a fourth embodiment of the present invention, a data interpolation operation may be realized by combining these plural data input means with each other (Fig. 26). Fig. 26 shows a structure of a data interpolation platform 1105 according to this fourth embodiment. As a basic structure, in the broadcast cache 1902 of the data interpolation platform according to the third embodiment shown in Fig. 19, it is so arranged that the process operation of the data interpolation platform of the embodiment 1 shown in Fig. 10 is carried out. It should also be understood that the process operations executed in both the packet shortage portion judging unit 1204 and the contents merge unit 1205 are replaced by the process operation executed by the platform manager 1901.

In this data interpolation platform 1105, first of all, similar to the first embodiment, in such a case that a data dropout caused by an instantaneous interruption of a digital broadcast may be predicted, a data interpolation operation is carried out by using the hierarchical transfer system of the digital broadcast. To this end, in response to an instruction issued from the platform manager 1901, a judgement is made as to whether or not an occurrence of a data dropout caused by an instantaneous interruption of the digital broadcast may be predicted in a near future based upon the information derived from the above-explained field strength monitoring apparatus 1803. If it is so predictable that such a data dropout may occur, then a check is done as to whether or not the above-described dropout-predictable data is present in the decoder cache 1203. In such a case that it is so predictable that the data may not be completely interpolated in accordance with this interpolation manner, namely in the case that the low bit rate encoded data corresponding to the dropout-predictable data cannot be detected, or becomes short within the decoder cache 1203 in the above-explained interpolation process operation 1403 shown in Fig. 12, data necessary for the interpolation is furthermore required with respect to the Web server of the contents distributing station which stores thereinto such a program used to execute the data interpolation operation by using the communication means such as the portable telephone in a similar manner to the third embodiment. The interpolation data which has been acquired from the contents distributing station in such a manner is acquired via the communication appliance 1810 so as to be stored into the communication cache 1904.

Since only limited amount of low bit rate data is stored on the side of the receiving terminal, in accordance with this fourth embodiment in which the communication requiring the higher cost is employed in the interpolation manner, as compared with the cost for the digital broadcast, even when the occurrence of the data dropout for a long time duration may be predicted, the continuation time of the digital broadcast without any interruption can be increased.

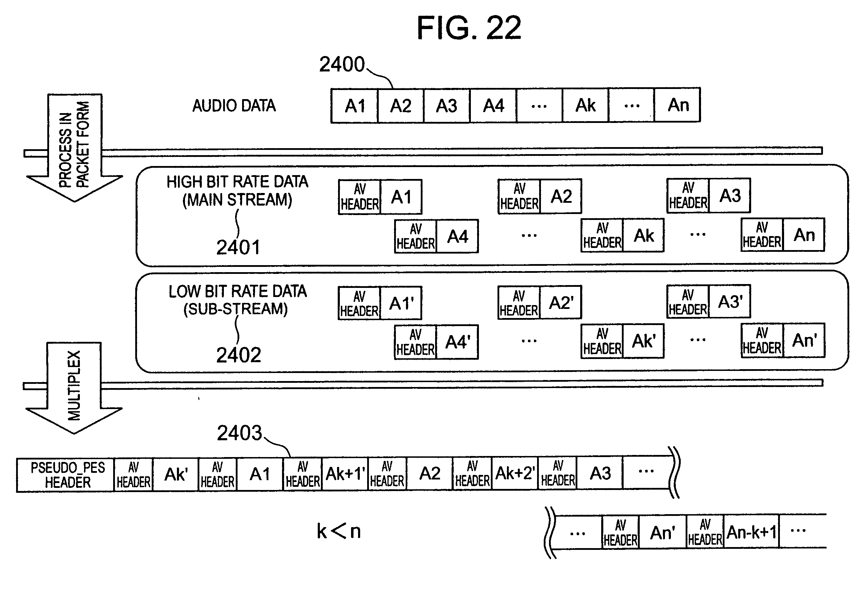

Next, a description will now be made of a data multiplexing operation executed in order to realize a digital broadcast without any interruption. In the first embodiment, the second embodiment, and the fourth embodiment, as described in the first embodiment, such a broadcast mode has been employed. That is, while 10 segments are allocated to the high quality data and 3 segments are allocated to the low quality data among 13 segments obtained by subdividing the frequency band of 5.6 MHz, the contents data having the different qualities have been distributed. In a digital broadcast, more specifically, in such a digital broadcast directed to a mobile object, as executed in the first embodiment, if the broadcast service with employment of all of these 13 segments is performed, then the band utilization efficiency would be lowered. Therefore, in an actual case, the digital broadcast directed to the mobile object is carried out by employing 1 to 3 segments. Then, when a music/picture data broadcast is performed with employment of only 1 segment, such different data which are temporally shifted over 1 segment are required to be multiplexed with each other. Referring now to Fig. 22, an actual operation of an encoder capable of executing this function will be explained.

It should be noted that such a case is assumed in Fig. 22 that data to be multiplexed corresponds only to audio data. Alternatively, picture data may be apparently multiplexed with voice data (speech data). In Fig. 22, it is firstly assumed that audio data 2400 is subdivided in the unit of, for example, A1 to An. In the case that this audio data is encoded, two sorts of encoding operations are carried out, namely an encoding operation is carried out in a high bit rate, and another encoding operation is performed in a low bit rate. Also, at the same time, since these audio data are processed in a packet manner, such headers (indicated as "AV headers" in below-mentioned explanation) are added to the high bit rate data 2401 and the low bit rate data 2402. These AV headers correspond to reference numerals 701 to 708, 721, and 722 shown in Fig. 7. It should also be noted that the data which are encoded in the high bit rate are expressed as "A1" to "An", and the data which are encoded in the low bit rate are expressed as "A1'" to "An'." In order to realize such a digital broadcast without substantially no interruption, low bit rate data which have been temporally shifted by a preset time delay "K" are transmitted in advance so as to execute a data multiplexing operation. This operation condition is indicated by reference numeral 2403 of Fig. 22. This multiplexed data is superimposed on a digital broadcasting wave so as to be broadcasted to the receiving terminal. In Fig. 22, it should be understood that the portion of "An" corresponds to "data_byte_main" 723, and the "Psude_PES" header corresponds to both "counter_flag" 721 and "sequential_counter" 722.

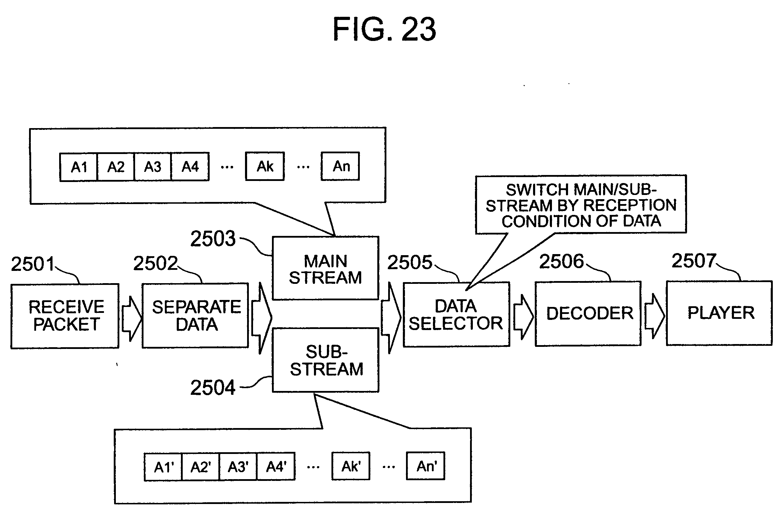

Next, a decoding operation of the receiving terminal when such digital data is received will now be explained with reference to Fig. 23. In Fig. 23, the data which has been multiplexed in Fig. 22 is first received by a packet receiver 2501, and thereafter, this received data is supplied to a data separating machine 2502. In this data separating machine 2502, both the high bit rate data and the low bit rate data, which have been multiplexed as indicated in Fig. 22, are separated into both a main stream 2503 and a substream 2504. In this case, the main stream 2503 implies such data normally having a high bit rate, and data which is mainly reproduced, whereas the sub-stream 2504 implies such data normally having a low bit rate, and data which is used for an interpolation operation. A data selector 2505 monitors such information (for example, "sequential_counter" shown in Fig. 7) indicative of time counts which are contained in headers of these high/low bit rate data, and detects as to whether or not the data of the main stream 2503 arrive without any interruption. In this case, when the supply of the data of the main stream 2503 are interrupted, the data selector 2505 judges as to whether or not such data of the substream 2504 which corresponds to the dropped data of the main stream is present among the data of the sub-stream 2504 which have arrived earlier than the data of the main stream 2503. Now, in such a case that the data of the substream 2504 corresponding to this dropped data is present, the data selector 2505 supplies to a decoder 2506, such data which is obtained by interpolating the dropped portion in the main stream by employing this low bit rate data. To the contrary, when no such a data dropout appears, the data selector 2505 continuously supplies the data of the main stream to the decoder 2506, and then, these data are reproduced by a player 2507. The data of the sub-stream 2504 will expire when the reproduction of the corresponding data of the main stream 2503 is accomplished.

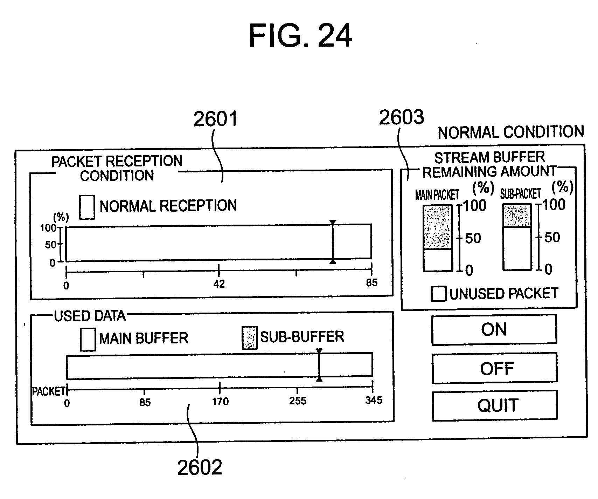

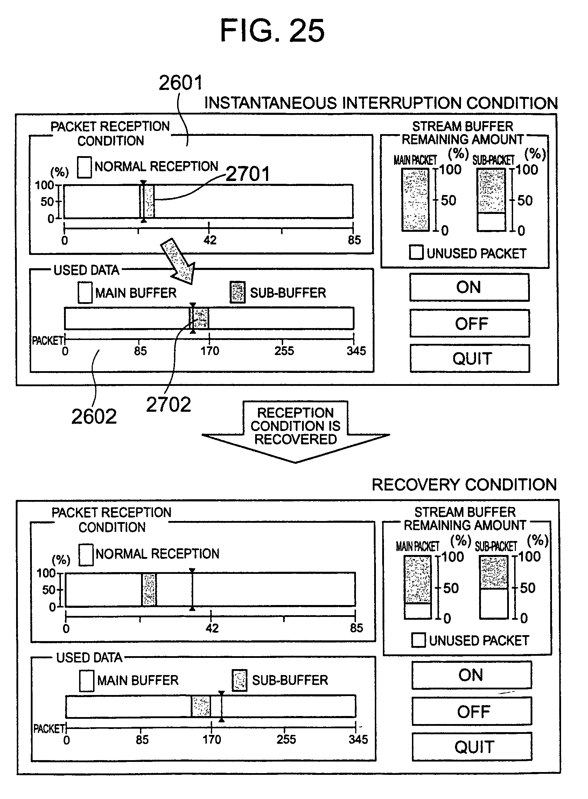

Function display screens of digital broadcasts without any interruptions using the inventive idea of the present invention will now be explained with reference to Fig. 24 and Fig. 25. Fig. 24 illustratively shows an example of a screen display as to a digital broadcast without any interruption, especially, as to a digital radio without any interruption. This function display screen is not normally displayed on a digital broadcast terminal, but may be displayed by calling a screen, if necessary, for instance, in such a case that a reception condition of a digital broadcast is deteriorated and this reception condition is wanted to be confirmed. Alternatively, this function display screen of the digital radio may be continuously displayed. On the function display screen of Fig. 24, a bar graph 2601, another bar graph 2602, and further, another bar graph 2603 are displayed. The bar graph 2601 shows a packet receiving condition of music data, and the like. Also, the bar graph 2602 shows a main buffer/sub-buffer switching condition capable of visibly indicating that the present music employs the main stream, or the substream. The bar graph 2603 represents a main buffer/sub-buffer packet condition indicative of data receiving conditions as to both the presently received main stream and the presently received sub-stream.

In the case that the reception of the digital broadcast is interrupted, as indicated in Fig. 25, the reception condition graph 2601 of the music data indicates such a fact that a packet is dropped since an instantaneous interruption happens to occur in such a way that a portion 2701 where data is interrupted is shown by changing the color of the bar graph. At the same time, while changing the color of the bar graph indicative of a portion 2702 in which the main stream is changed into the sub-stream, the data used for reproducing the music is switched from the main buffer to the sub-buffer. A difference between the length of the portion indicative of the data reception condition and the length of the portion where the data of the stream switching graph is caused by that the bar graph 2601 indicates the time indication whereas the bar graph 2602 shows the packet number indication. Apparently, these lengths may be made coincident with each other so as to be displayed. In this example, in the case that the digital broadcast is interrupted, the following fact may be understood that the buffer data contained in the main stream is lower than the normal data condition shown in Fig. 24, and furthermore, the buffer amount of the sub-stream is also lowered. However, since the data interpolation is carried out by employing the data of the sub-stream and by adjusting the timing, the music broadcast itself never be interrupted. When the data of the main stream is recovered, such a bar graph indicative of switching of the main stream/sub-stream is brought into such a condition that the main stream is reproduced, the data receiving operation may be carried out under normal condition.

In the above-explained embodiments, the receiving terminals are directed to the employment of the ground wave digital broadcast. Alternatively, this ground wave digital broadcast may be replaced by such media as a satellite broadcast and a satellite communication. Since such media is employed, digital broadcast services without any interruptions may be provided over a wide range.

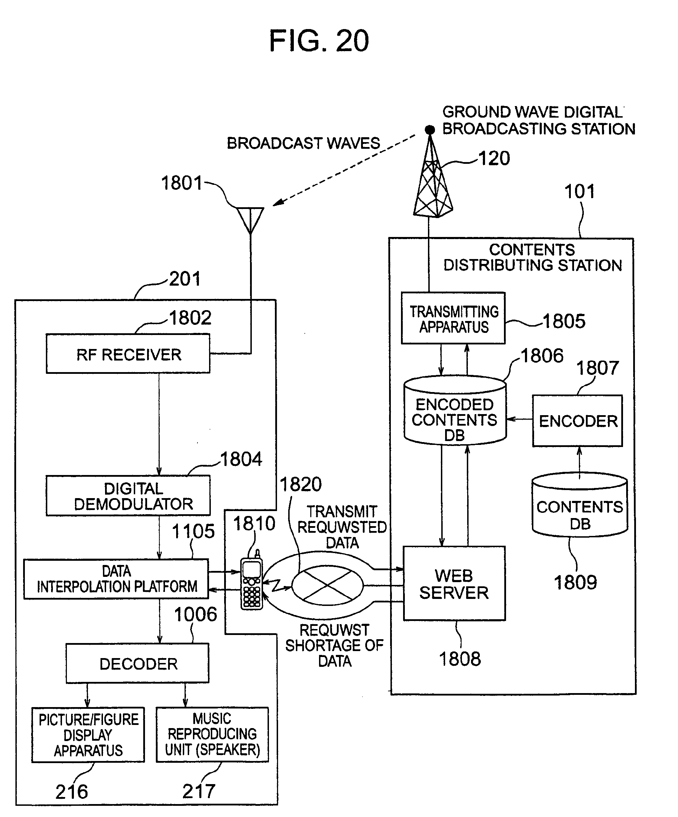

Furthermore, as a modification of the above-described third embodiment, as represented in Fig. 20, similar to the second embodiment, while a data dropout due to an instantaneous interruption is detected by checking a discontinuity of values of "sequential_counter" contained in a TS packet, a shortage of data may be requested by way of a bidirectional communication established between the portable telephone 1810 and the contents distributing station.

It should also be understood that in the above-described embodiments, the instantaneous interruption of the digital broadcasting waves is judged by employing both the strengths of the electromagnetic waves (field strengths) and also the continuity of the transport stream. As other judgement indexes, the following indexes may be employed, namely, a quantizing scale error in the case that decoded voice/image are reproduced; a total number of not-existing error data which are produced during decoding operation; a macroblock number except for a determined value; a total number of incompleted decoding operations for 1 frame within a preselected time duration; and a parity check of a bit stream.

It should be further understood by those skilled in the art that the foregoing description has been made on embodiments of the invention and that various changes and modifications may be made in the invention without departing from the spirit of the invention and the scope of the appended claims.

## Claims

1. A digital broadcast receiving method used in a digital broadcast receiving terminal (201) for receiving a digital broadcasting electromagnetic wave transmitted from a data broadcast transmitting station (120) and for outputting desirable data,
including a digital broadcast interpolating method comprising:
a process step (1702 - 1704) for predicting that a reception level of a digital broadcasting electromagnetic wave becomes lower than, or equal to a predetermined value (1605);
a process step for previously storing into the receiving terminal, such data (312, 322) that a data dropout of a digital broadcasting electromagnetic wave to be received is predicted based upon a result of said predicting process step; and
a process step (1307) for interpolating dropped data by using said previously stored data when the predicted data dropout happens to occur.

2. A digital broadcast receiving apparatus used in a digital broadcast receiving terminal (201) for receiving a digital broadcasting electromagnetic wave transmitted from a data broadcast transmitting station (120) and for outputting desirable data,
said digital broadcast receiving apparatus comprising:
an electromagnetic wave strength monitoring apparatus (1803) for measuring a reception level of a digital broadcasting electromagnetic wave so as to predict that said reception level becomes lower than, or equal to a predetermined value (1605); and
a storage area for storing thereinto such data that a data dropout of a digital broadcasting electromagnetic wave to be received is predicted based upon a prediction result of said electromagnetic wave strength monitoring apparatus; wherein:
when said predicted data dropout happens to occur, said dropped data is interpolated by using the data stored in said storage area.

3. A digital broadcast transmitting system for transmitting contents data (150) as a data broadcast, wherein:
broadcast data are constituted by a plurality of data packets;
two sorts of data (411, 412), the reproduction time instants of which are different from each other, and the bit rates of which are different from each other, are stored into the same data packet; and
said digital broadcast transmitting system includes a data encoder (1807) for adding headers having a series of index numbers to the respective data packets in such a case that after contents to be transmitted are converted into digital data, said digital data are converted into said data packets transmitted as digital broadcast.

4. A digital broadcast receiving method according to claim 1, wherein:
both a deterioration index of a data bit stream, which is represented by strong/weak levels of electromagnetic waves at either a peripheral position of the digital broadcast receiving terminal or a move prediction position of the digital broadcast receiving terminal, and also a dropout of digital broadcast data during reception are predicted; said dropped data which is predicted based upon said prediction result is previously required to a transmission station; and desirable data of said receiving terminal is received from the transmission station in response to said request.

5. A digital broadcast receiving method as claimed in claim 4, wherein:
as a deterioration index of said data bit stream, at least one of the following indexes is employed, namely, the strength of electromagnetic waves in the receiving terminal, a discontinuity of transport stream packets, a quantizing scale error in the case that decoded voice/image are reproduced, a total number of not-existing error data which are produced during decoding operation, a macroblock number except for a determined value, a total number of incompleted decoding operations for 1 frame within a preselected time duration, and a parity check of a bit stream.

6. A digital broadcast receiving method in which a digital broadcast wave is received which is broadcasted by adding data heads exclusively allocated so as to prepare a dropout of a bit stream to same contents having an arbitrary sort of data qualities, the received data is temporarily stored in a storage apparatus, and desirable data is outputted which is derived from either said storage apparatus or the received electromagnetic waves, wherein:
at the receiving terminal of said digital broadcast, both a deterioration index of a data bit stream, which is represented by strong/weak levels of electromagnetic waves at either a peripheral position of the digital broadcast receiving terminal or a move prediction position of the digital broadcast receiving terminal, and also a dropout of digital broadcast data (312) during reception are predicted;
in the case that an occurrence of a dropout of said data bit stream is predicted based upon a result of said prediction, if the relevant data is present in the data (322) which have been temporarily stored in said storage apparatus, then said relevant data is previously stored into a cache, whereas if the data dropout actually occurs, then the dropped data is interpolated by using said data stored in the cache.

7. A digital broadcast receiving method as claimed in claim 6, wherein:
as a deterioration index of said data bit stream, at least one of the following indexes is employed, namely, a strength of electromagnetic waves in the receiving terminal, a discontinuity of transport stream packets, a quantizing scale error in the case that decoded voice/image are reproduced, a total number of not-existing error data which are produced during decoding operation, a macroblock number except for a determined value, and a parity check of a bit stream.

8. A digital broadcast receiving method as claimed in claim 6, wherein :
in the case that said dropout-predicted data is not present in the data temporarily stored in said storage apparatus, said dropout-predicted data is requested for a transmission station, and data transmitted from said transmission station is temporarily stored into the storage apparatus.

9. A digital broadcast receiving method as claimed in claim 8, wherein:
as a deterioration index of said data bit stream, at least one of the following indexes is employed, namely, the strength of electromagnetic waves in the receiving terminal, a discontinuity of transport stream packets, a quantizing scale error in the case that decoded voice/image are reproduced a macroblock number except for a determined value and a parity check of a bit stream.
